# EUROPEAN PATENT APPLICATION

(11) **EP 4 811 273 A1**
(43) Date of publication of application: **23.09.2026**
(21) Application number: 26152628.9
(22) Date of filing: 19.01.2026
(51) Int. Cl.: G06T 5/94, G06T 5/40, G06T 5/92

(54) **HIGH DYNAMIC RANGE BRIGHTNESS CONTROL**

(30) Priority: 21.03.2025 US 202519086711
(71) Applicant: Roku, Inc., San Jose, CA 95110 (US)
(72) Inventor: LEE, Il Jun, San Jose, 95110 (US); ISAAC, Nancy Anna, San Jose, 95110 (US)
(74) Representative: Yang, Shu

(57) **Abstract**

Disclosed herein are system, apparatus, article of manufacture, method and/or computer program product embodiments, and/or combinations and sub-combinations thereof, for high dynamic range brightness control. An example embodiment operates by determining, by at least one computer processor, a darkness level of a video frame, determining a brightness adjustment level based on the darkness level of the video frame, and adjusting a brightness level of a later frame based on at least the brightness adjustment level. The brightness level for the later video is adjusted within two video frames from the video frame.

## Description

### BACKGROUND

This application claims priority to U.S. Non-Provisional application 19/086,711 filed on March 21, 2025, which is incorporated by reference herein in its entirety.

### FIELD

This disclosure is generally directed to controlling a brightness level of a video frame, and more particularly to adjusting the brightness level of high dynamic range content.

### SUMMARY

Provided herein are system, apparatus, article of manufacture, method and/or computer program product embodiments, and/or combinations and sub-combinations thereof, for high dynamic range brightness control.

An example embodiment operates by determining, by at least one computer processor, a darkness level of a video frame, determining a brightness adjustment level based on the darkness level of the video frame, and adjusting a brightness level of a later video frame based on at least the brightness adjustment level within two video frames from the video frame.

### BRIEF DESCRIPTION OF THE FIGURES

The accompanying drawings are incorporated herein and form a part of the specification.
FIG. 1 illustrates a block diagram of a multimedia environment, according to some embodiments.
FIG. 2 illustrates a block diagram of a streaming media device, according to some embodiments.
FIG. 3 illustrates a block diagram of a brightness adjustment module, according to some embodiments.
FIG. 4 illustrates correlation graphs for brightness adjustment level determination, according to some embodiments.
FIG. 5 illustrates a flow diagram of a method for controlling a brightness level of a video frame, according to some embodiments.
FIG. 6 illustrates a flow diagram of a method for determining a brightness adjustment level, according to some embodiments.
FIG. 7 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for controlling brightness level of high dynamic range (HDR) content.

When HDR content is rendered on a display, brightness levels of scenes (one or more video frames) may be too extreme, either overly bright or too dark, leading to eye fatigue or losing details of the scene.

Embodiments described herein may address some or all of the foregoing technical issues that relate to rendering HDR content. By adaptively controlling and adjusting the brightness level based on the video's content, extreme brightness levels are reduced. For example, the brightness of dark scenes may be increased and the brightness of bright scenes may be decreased. This improves user comfort during video playback.

When the settings of a display device is set to automatic adjustment such as HDR Auto, a current brightness level of the video content is monitored. If the scene's brightness exceeds certain thresholds, the system dynamically adjusts the video output in real-time to ensure enhanced brightness levels while reducing discomfort to the users. The thresholds for these adjustments are multi-steps, allowing for fine-grained control based on the detected brightness levels. The brightness level of the video content (or the darkness level) may be determined using statistical methods or using machine learning models implemented on a neural processing unit (NPU) of a media device.

The real-time adjustment of picture quality (e.g., brightness level) ensures that users experience enhanced brightness settings continuously throughout video playback. The speed at which darkness levels are measured and the PQ adjustments are applied is a factor in user satisfaction. Embodiments of this disclosure provide fast ways to achieve those adjustments. By minimizing delay, embodiments of this disclosure provide a seamless viewing experience.

Embodiments of this disclosure may detect video content (e.g., through scene recognition or machine learning models) and may applying broader adjustments to the entire video. Additionally or alternatively, external devices or sensors may be used to measure ambient light levels and adjust the brightness levels based on the ambient light levels.

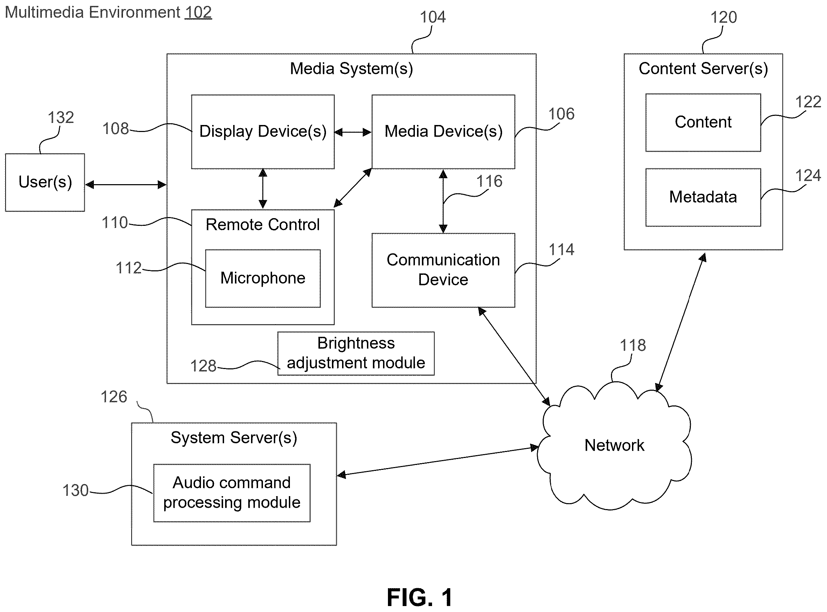

Various embodiments of this disclosure may be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

The multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. The communication device 114 may include, for example, a cable modem or satellite TV transceiver. The media device 106 may communicate with the communication device 114 over a link 116, wherein the link 116 may include wireless (such as WiFi) and/or wired connections.

In various embodiments, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 106 and/or display device 108, such as a remote control, a tablet, laptop computer, smartphone, wearable, on-screen controls, integrated control buttons, audio controls, or any combination thereof, to name just a few examples. In an embodiment, the remote control 110 wirelessly communicates with the media device 106 and/or display device 108 using cellular, Bluetooth, infrared, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form. Content 122 may include HDR content.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index. In some embodiments, metadata 124 may include information about a darkness level of content 122.

The multimedia environment 102 may include one or more system servers 126. The system servers 126 may operate to support the media devices 106 from the cloud. It is noted that the structural and functional aspects of the system servers 126 may wholly or partially exist in the same or different ones of the system servers 126.

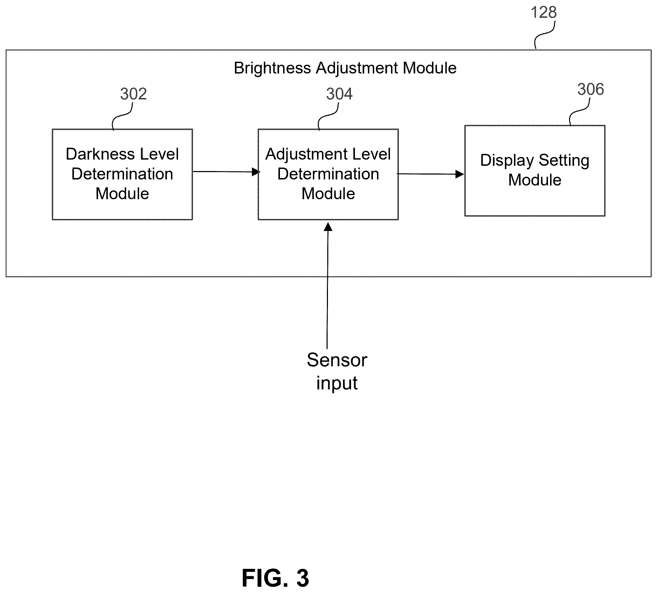

Media system 104 may include a brightness adjustment module 128 that provides brightness settings to display device 108. The brightness settings may be output to display device 108 via an application programming interface (API). Additional details regarding brightness adjustment module 128 are described below with reference to FIG. 3.

The system servers 126 may also include an audio command processing module 130. As noted above, the remote control 110 may include a microphone 112. The microphone 112 may receive audio data from users 132 (as well as other sources, such as the display device 108). In some embodiments, the media device 106 may be audio responsive, and the audio data may represent verbal commands from the user 132 to control the media device 106 as well as other components in the media system 104, such as the display device 108.

In some embodiments, the audio data received by the microphone 112 in the remote control 110 is transferred to the media device 106, which is then forwarded to the audio command processing module 130 in the system servers 126. The audio command processing module 130 may operate to process and analyze the received audio data to recognize the user 132's verbal command. The audio command processing module 130 may then forward the verbal command back to the media device 106 for processing.

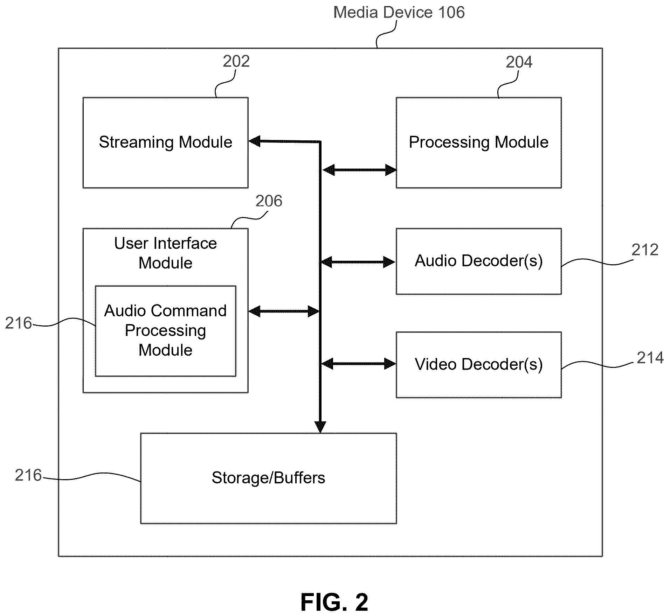

In some embodiments, the audio data may be alternatively or additionally processed and analyzed by an audio command processing module 216 in the media device 106 (see FIG. 2). The media device 106 and the system servers 126 may then cooperate to pick one of the verbal commands to process (either the verbal command recognized by the audio command processing module 130 in the system servers 126, or the verbal command recognized by the audio command processing module 216 in the media device 106).

FIG. 2 illustrates a block diagram of an example media device 106, according to some embodiments. Media device 106 may include a streaming module 202, processing module 204, storage/buffers 208, and user interface module 206. As described above, the user interface module 206 may include the audio command processing module 216.

The media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, AV1, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, AV1, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, the user 132 may interact with the media device 106 via, for example, the remote control 110. For example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132.

In streaming embodiments, the streaming module 202 may transmit the content to the display device 108 in real time or near real time as it receives such content from the content server(s) 120. In non-streaming embodiments, the media device 106 may store the content received from content server(s) 120 in storage/buffers 208 for later playback on display device 108.

### Brightness Level Adjustment of HDR Content

FIG. 3 illustrates a block diagram of brightness adjustment module 128, according to some embodiments. As noted above, in certain embodiments, brightness adjustment module 128 may be implemented by media system (s) 104 in multimedia environment 102 of FIG. 1. In some embodiments, brightness adjustment module 128 may be implemented by media device(s) 106.

As shown in FIG. 3, brightness adjustment module 128 comprises a darkness level determination module 302, an adjustment level determination module 304, and a display setting module 306.

Darkness level determination module 302 may receive content (e.g., from streaming module 202) such as HDR content. In some embodiments, darkness level determination module 302 may extract a video frame from the content and determine a darkness level of the video frame. Darkness level determination module 302 may output the darkness level of the video frame to adjustment level determination module 304.

In some embodiments, darkness level determination module 302 may determine the darkness level of the video frame using statistical methods. For example, darkness level determination module 302 may determine a histogram associated with the video frame based on characteristics values of pixels of the video frame. In some embodiments, characteristics values of the pixels of the video frame may correspond to RGB values of the pixels of the video frames. Darkness level determination module 302 may convert the video frame from color to grayscale. To convert the video frame to grayscale, darkness level determination module 302 may determine a weighted average of the red, green, and blue color components (values) for each pixel in the video frame. In some embodiments, the weighted average may be determined using the coefficients 0.299, 0.587, and 0.114 respectively. A person of ordinary skill in the art would appreciate that other coefficients may be used.

In some embodiments, the histogram may be determined using the converted video frame (e.g., grayscale). In order to determine the histogram, darkness level determination module 302 may determine for each grayscale value (0 to 255), the number of pixels in the video frame that have that intensity. Then, darkness level determination module 302 may determine an average of the histogram. The darkness level of the video frame may correspond to the average of the histogram.

In some embodiments, darkness level determination module 302 may use an artificial intelligence (AI) model to determine the darkness level of the video frame. For example, a deep learning model may be trained to analyze the video frame and to determine the darkness level of the video frame. In some embodiments, the artificial intelligence model may estimate or predict the brightness level of later video frames based on the previous video frames.

After determining the darkness level of the video frame, adjustment level determination module 304 may determine a brightness adjustment level based on the darkness level of the video frame. In some embodiments, the brightness adjustment level may be expressed as a percentage change (increase/decrease) in a brightness level (e.g., of a display). For example, a brightness adjustment level equals to zero may indicate no change in the brightness level for later video frames. Adjustment level determination module 304 may output the brightness adjustment level to display setting module 306. In some embodiments, when no change in the brightness level is desired (e.g., brightness adjustment level is equal to zero), adjustment level determination module 304 may not output the brightness adjustment level to display setting module 306.

In order to determine the brightness adjustment level, brightness adjustment module 304 may compare the darkness level of the video frame to one or more thresholds. In some embodiments, the brightness adjustment level may be set to zero if the darkness level of the video frame is within a predetermined range (e.g., between a minimum threshold and a maximum threshold). The thresholds may be previously determined based on user experience. The thresholds may be stored in the form of a correlation graph, a correlation table, or the like. The thresholds may be determined based on user experience using different display device models.

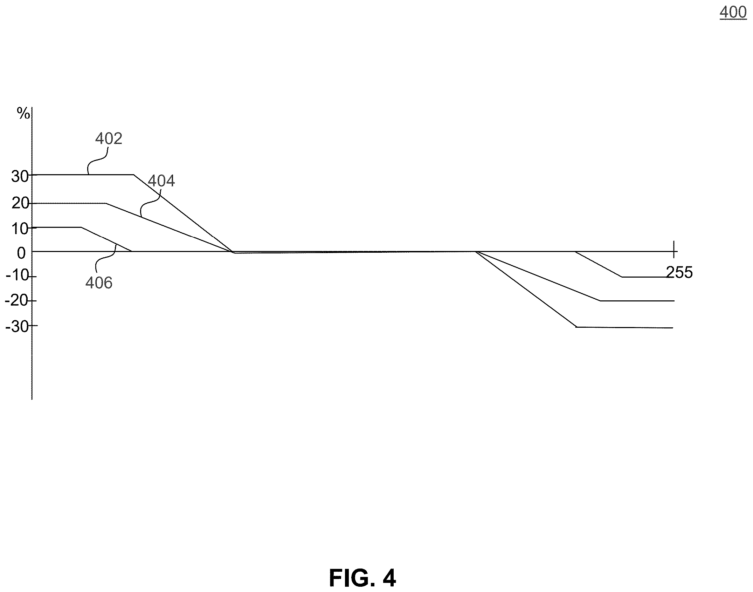

In some embodiments, adjustment level determination module 304 may use a correlation graph to determine the brightness adjustment level. Example correlation graphs are shown in FIG. 4.

FIG. 4 is a schematic 400 that illustrates correlation graphs, according to some embodiments. As discussed above, adjustment level determination module 304 may use a correlation graph to determine the brightness adjustment level. The correlation graph may be determined based on user experience. The correlation graph may be obtained by media device(s) 106 from system server(s) 126 and may be stored in storage 216.

In some embodiments, adjustment level determination module 304 may identify a correlation graph from a plurality of available correlation graphs based on one or more factors. For example, a correlation graph may be associated with a type of display device. Adjustment level determination module 304 may determine a type of display device 108 (e.g., via an API with display device 108) and may identify the correlation graph associated with the type of the display device. The type of display device may indicate a brand and/or model of the display device.

FIG. 4 illustrates a first correlation graph 402, a second correlation graph 404, and a third correlation graph 406. The x-axis in FIG. 4 represents the darkness level (e.g., a zero value represents the minimum brightness or completely black and a 255 value may represent the maximum brightness or white). The y-axis represents the brightness adjustment level (as a percentage).

As an illustrative example, adjustment level determination module 304 may use first correlation graph 402 to determine the brightness adjustment level. Using the first correlation graph 402, if the darkness level of the video frame is 128, the brightness adjustment level is zero. Thus, adjustment level determination module 304 may not update the brightness level. In another example, if the darkness level of the video frame is 10, then the brightness adjustment level is 30% as determined using first correlation graph 402. The brightness adjustment level is used to change the brightness level of display device as described further below.

As shown in FIG. 4, the correlation graphs may have a slope portion between zero change in the brightness level to the maximum increase/decrease in the brightness level. This provide the advantage of gradual change in the brightness level.

In some embodiments, the plurality of correlation graphs may correspond to multiple type of displays. For example, for the same darkness level, a different brightness adjustment level may be applied based on the type of the display device. For example, first correlation graph 402 may correspond to a display device of brand A and second correlation graph 404 may correspond to a display device of brand B. If the darkness level of the video frame is 10 and the display device is of brand A then the brightness adjustment level is 30%. But, if the darkness level of the video frame is 10 and the display device is of brand B then the brightness adjustment level is 20% as determined using second correlation graph 404.

Referring back to FIG. 3, adjustment level determination module 304 may also receive an input from a sensor. The input may indicate the brightness level of an environment of display device(s) 108 (e.g., the brightness level of a room where the display device(s) 108 is located). In some embodiments, the input may be received from an electronic device (e.g., smart phone) associated with user 132. Brightness adjustment level may select the correlation graph based on the brightness level of the environment. For example, the plurality of correlation graphs shown in FIG. 4 may correspond to different brightness levels of the environment. For example, first correlation graph 402 may be used for low light environment (less than 200 lux), second correlation graph 404 may be used for medium light environment (200-500 lux), and third correlation graph 406 may be used for high light environment (greater than 500 lux).

In some embodiments, brightness adjustment module 128 may update the brightness level at a frequency determined based on the video frame rate. For example, if the video frame rate is 60 frame per second (fps), brightness adjustment module 128 may determine and adjust the brightness level at a rate of 30 fps.

After receiving the brightness adjustment level, display setting module 306 may determine proper parameters associated with the brightness adjustment level for the API. Display setting module 306 may output the determined parameters to display device(s) 108. In some embodiments, the brightness adjustment level may be mapped to the parameters using predefined table associated with display device 108.

In some embodiments, brightness adjustment module 128 may determine a darkness level associated with a center of the video frame and a darkness level associated with the periphery of the video frame. Brightness adjustment module 128 may use the darkness level associated with the center of the video frame to determine the brightness adjustment level. The center of the video frame may correspond to pixels near a center pixel of the video frame. The periphery of the video frame may correspond to pixels near or adjacent to pixels located at the periphery of the video frame.

In some embodiments, the brightness adjustment level is applied to all pixels of later video frames. In other embodiments, the brightness adjustment level is applied to a portion of the pixels of later frames. Adjustment level determination module 304 may determine a first brightness adjustment level to be applied to a first portion of the pixels of later video frames and a second brightness adjustment level to be applied to a second portion of the pixels of later video frames. Display setting module 306 may determine the corresponding setting to the first brightness adjustment level and the second brightness adjustment level and send the settings and an indication of the corresponding pixels to display device(s) 108 via API.

In some embodiments, brightness adjustment module 128 may use one or more machine learning algorithms to determine a focus portion in the video frame and determine the darkness level of the video frame using the pixels corresponding to the focus portion. The focus portion may correspond to pixels associated with a subject or an object as opposed to background pixels.

In some embodiments, brightness adjustment module 128 may determine the darkness level of the video frame using all the pixels of the video frame but may apply the brightness adjustment level to pixels associated with the focus scene.

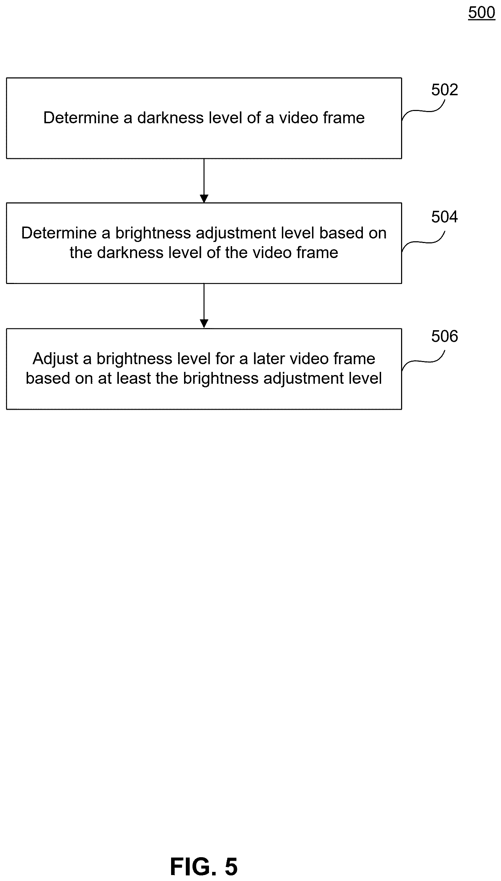

FIG. 5 is a flowchart for a method 500 for brightness level adjustment, according to an embodiment. Method 500 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 5, as will be understood by a person of ordinary skill in the art.

Method 500 shall be described with reference to FIG. 3. However, method 500 is not limited to that example embodiment.

In step 502, brightness adjustment module 128 may receive a video frame. Brightness adjustment module 128 may determine a darkness level of the video frame. Brightness adjustment module 128 may convert the video frame from color to grayscale. Brightness adjustment module 128 may determine the darkness level based on a histogram of the converted video frame.

In some embodiments, a machine learning model may determine contents of the video frame and may determine the darkness level based on the contents. For example, the machine learning model may determine the content of the video frame is a "sunny sky" and may determine a corresponding darkness level (e.g., high brightness level). In another example, the machine learning model may determine the content of the video frame is a "night scene" and may determine a corresponding darkness level (e.g., low brightness level).

In step 504, brightness adjustment module 128 may determine a brightness adjustment level based on the darkness level of the video frame. For example, brightness adjustment module 128 may use a correlation graph (e.g., first correlation graph 402 of FIG. 4) to determine a percentage increase/decrease in a brightness level. In some embodiments, brightness adjustment module may map the darkness level of the video frame to a brightness adjustment level using a correlation table. In some embodiments, the correlation graph and/or the correlation table may be associated with a type of display device. In addition, the correlation graph and/or the correlation table may be associated with a brightness level of an environment of the display device and/or with a darkness level of the content from which the video frame is extracted.

In step 506, brightness adjustment module 128 may adjust the brightness level for a later video frame based on the at least the brightness adjustment level. Brightness adjustment module 128 may determine the setting for an API to output to display device based on the brightness adjustment level. The brightness level for the later video is adjusted within two video frames from the video frame.

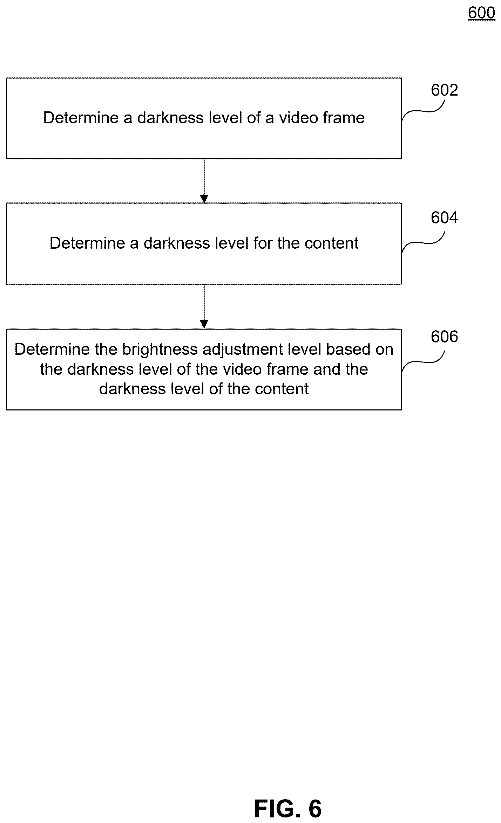

FIG. 6 is a flowchart for a method 600 for determining a brightness adjustment level, according to an embodiment. Method 600 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 6, as will be understood by a person of ordinary skill in the art.

In step 602, brightness adjustment module 128 may determine a darkness level of the video frame. The video frame may be retrieved from contents received from content server 120 and being output to display device 108.

In step 604, brightness adjustment module 128 may determine a darkness level for the content. The darkness level for the content may be determined as a cumulative average of the darkness levels of the previous video frames.

In some embodiments, the darkness level for the content may be retrieved from metadata associated with the content. For example, metadata 124 may include a darkness level of the movie.

In step 606, brightness adjustment module 128 may determine the brightness adjustment level based on the darkness level of the video frame and the darkness level of the content. For example, the correlation graph used to determine the brightness adjustment level may be modified based on the darkness level of the content. In some embodiments, a center of the correlation graph may be shifted based on the darkness level of the content.

For example, if the darkness level of the content is below a threshold (e.g., dark movie), the center of the curve may be shifted to the left. Then, brightness adjustment module may use the adjusted correlation graph to determine the brightness adjustment level.

### Example Computer System

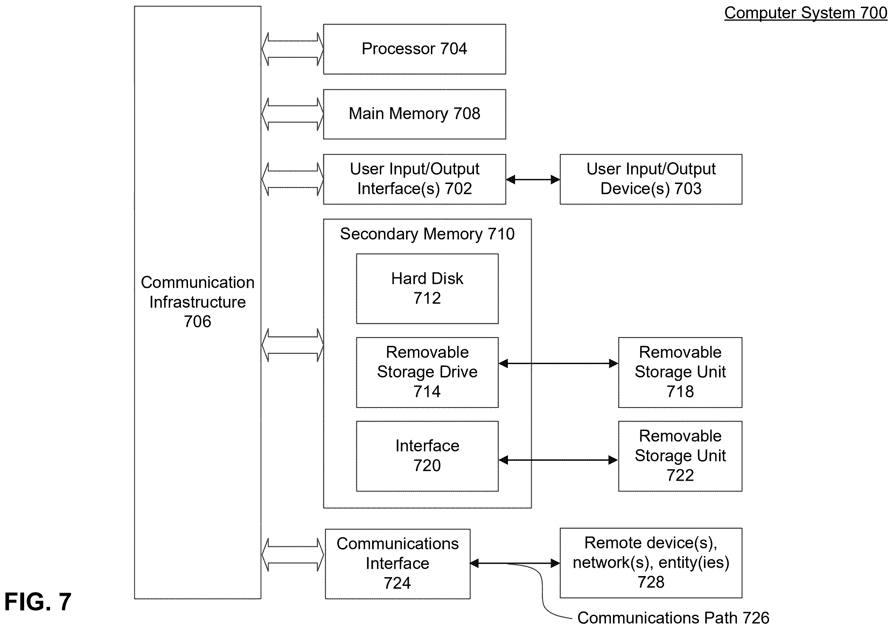

Various embodiments may be implemented, for example, using one or more well-known computer systems, such as computer system 700 shown in FIG. 7. For example, the media device 106 may be implemented using combinations or sub-combinations of computer system 700. Also or alternatively, one or more computer systems 700 may be used, for example, to implement any of the embodiments discussed herein, as well as combinations and sub-combinations thereof.

Computer system 700 may include one or more processors (also called central processing units, or CPUs), such as a processor 704. Processor 704 may be connected to a communication infrastructure or bus 706.

Computer system 700 may also include user input/output device(s) 703, such as monitors, keyboards, pointing devices, etc., which may communicate with communication infrastructure 706 through user input/output interface(s) 702.

One or more of processors 704 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 700 may also include a main or primary memory 708, such as random access memory (RAM). Main memory 708 may include one or more levels of cache. Main memory 708 may have stored therein control logic (i.e., computer software) and/or data.

Computer system 700 may also include one or more secondary storage devices or memory 710. Secondary memory 710 may include, for example, a hard disk drive 712 and/or a removable storage device or drive 714. Removable storage drive 714 may be a floppy disk drive, a magnetic tape drive, a compact disk drive, an optical storage device, tape backup device, and/or any other storage device/drive.

Removable storage drive 714 may interact with a removable storage unit 718. Removable storage unit 718 may include a computer usable or readable storage device having stored thereon computer software (control logic) and/or data. Removable storage unit 718 may be a floppy disk, magnetic tape, compact disk, DVD, optical storage disk, and/ any other computer data storage device. Removable storage drive 714 may read from and/or write to removable storage unit 718.

Secondary memory 710 may include other means, devices, components, instrumentalities or other approaches for allowing computer programs and/or other instructions and/or data to be accessed by computer system 700. Such means, devices, components, instrumentalities or other approaches may include, for example, a removable storage unit 722 and an interface 720. Examples of the removable storage unit 722 and the interface 720 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 700 may further include a communication or network interface 724. Communication interface 724 may enable computer system 700 to communicate and interact with any combination of external devices, external networks, external entities, etc. (individually and collectively referenced by reference number 728). For example, communication interface 724 may allow computer system 700 to communicate with external or remote devices 728 over communications path 726, which may be wired and/or wireless (or a combination thereof), and which may include any combination of LANs, WANs, the Internet, etc. Control logic and/or data may be transmitted to and from computer system 700 via communication path 726.

Computer system 700 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 700 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 700 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 700, main memory 708, secondary memory 710, and removable storage units 718 and 722, as well as tangible articles of manufacture embodying any combination of the foregoing. Such control logic, when executed by one or more data processing devices (such as computer system 700 or processor(s) 704), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 7. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims and their equivalents.

### Numbered aspects

By way of non-limiting example, some aspects of the disclosure are set out in the following numbered clauses.
Numbered Clause 1. A computer-implemented method for brightness adjustment, comprising:
   determining, by at least one computer processor, a darkness level of a video frame;
   determining a brightness adjustment level based on the darkness level of the video frame; and
   adjusting a brightness level for a later video frame based on at least the brightness adjustment level, wherein the brightness level for the later video is adjusted within two video frames from the video frame.
Numbered Clause 2. The computer-implemented method of Numbered Clause 1, wherein determining the darkness level of the video frame comprises:
   converting the video frame from color to grayscale;
   determining a histogram associated with the video frame using the converted video frame; and
   determining the darkness level of the video frame based on the histogram.
Numbered Clause 3. The computer-implemented method of Numbered Clause 1 or 2, wherein adjusting a brightness level comprises:
   determining a brightness setting based on the brightness adjustment level; and
   transmitting the brightness setting to a display via an application programming interface.
Numbered Clause 4. The computer-implemented method of any preceding Numbered Clause, wherein determining the brightness adjustment level comprises:
   mapping the darkness level of the video frame to the brightness adjustment level.
Numbered Clause 5. The computer-implemented method of Numbered Clause 4, wherein the mapping is based on a type of a display.
Numbered Clause 6. The computer-implemented method of any preceding Numbered Clause, wherein the video frame corresponds to a current video frame of a video; and
   wherein the brightness adjustment level is further based on a cumulative darkness level of preceding video frames.
Numbered Clause 7. The computer-implemented method of any preceding Numbered Clause, wherein determining the darkness level of the video frame comprises:
   determining contents of the video frame using a machine learning model; and
   determining the darkness level based on the contents.
Numbered Clause 8. A system, comprising:
   one or more memories;
   at least one processor each coupled to at least one of the memories and configured to perform operations comprising:
      determining a darkness level of a video frame;
      determining a brightness adjustment level based on the darkness level of the video frame; and
      adjusting a brightness level for a later video frame based on at least the brightness adjustment level, wherein the brightness level for the later video is adjusted within two video frames from the video frame.
Numbered Clause 9. The system of claim 8, wherein the operations further comprise:
   converting the video frame from color to grayscale;
   determining a histogram associated with the video frame using the converted video frame; and
   determining the darkness level of the video frame based on the histogram.
Numbered Clause 10. The system of Numbered Clause 8 or 9, wherein the operations further comprise:
   determining a brightness setting based on the brightness adjustment level; and
   transmitting the brightness setting to a display via an application programming interface.
Numbered Clause 11. The system of any of Numbered Clauses 8 to 10, wherein the operations further comprise:
   mapping the darkness level of the video frame to the brightness adjustment level.
Numbered Clause 12. The system of Numbered Clause 11, wherein the mapping is based on a type of a display.
Numbered Clause 13. The system of any of Numbered Clauses 8 to 12, wherein the operations further comprise:
   determining contents of the video frame using a machine learning model; and
   determining the darkness level based on the contents.
Numbered Clause 14. A non-transitory computer-readable medium having instructions stored thereon that, when executed by at least one computing device, cause the at least one computing device to perform operations comprising:
   determining, by at least one computer processor, a darkness level of a video frame;
   determining a brightness adjustment level based on the darkness level of the video frame; and
   adjusting a brightness level for a later video frame based on at least the brightness adjustment level, wherein the brightness level for the later video is adjusted within two video frames from the video frame.
Numbered Clause 15. The non-transitory computer-readable medium of Numbered Clause 14, wherein the operations further comprise:
   converting the video frame from color to grayscale;
   determining a histogram associated with the video frame using the converted video frame; and
   determining the darkness level of the video frame based on the histogram.
Numbered Clause 16. The non-transitory computer-readable medium of Numbered Clause 14 or 15, wherein the operations further comprise:
   determining a brightness setting based on the brightness adjustment level; and
   transmitting the brightness setting to a display via an application programming interface.
Numbered Clause 17. The non-transitory computer-readable medium of any of Numbered Clauses 14 to 16, wherein the operations further comprise:
   mapping the darkness level of the video frame to the brightness adjustment level.
Numbered Clause 18. The non-transitory computer-readable medium of Numbered Clause 17, wherein the mapping is based on a type of a display.
Numbered Clause 19. The non-transitory computer-readable medium of any of Numbered Clauses 14 to 18, wherein the operations further comprise:
   determining contents of the video frame using a machine learning model; and
   determining the darkness level based on the contents.
Numbered Clause 20. The non-transitory computer-readable medium of any of Numbered Clauses 14 to 19, wherein the video frame corresponds to a current video frame of a video; and
   wherein the brightness adjustment level is further based on a cumulative darkness level of preceding video frames.

## Claims

1. A computer-implemented method for brightness adjustment, comprising:
determining, by at least one computer processor, a darkness level of a video frame;
determining a brightness adjustment level based on the darkness level of the video frame; and
adjusting a brightness level for a later video frame based on at least the brightness adjustment level, wherein the brightness level for the later video is adjusted within two video frames from the video frame.

2. The computer-implemented method of claim 1, wherein determining the darkness level of the video frame comprises:
converting the video frame from color to grayscale;
determining a histogram associated with the video frame using the converted video frame; and
determining the darkness level of the video frame based on the histogram.

3. The computer-implemented method of claim 1 or 2, wherein adjusting a brightness level comprises:
determining a brightness setting based on the brightness adjustment level; and
transmitting the brightness setting to a display via an application programming interface.

4. The computer-implemented method of any preceding claim, wherein determining the brightness adjustment level comprises:
mapping the darkness level of the video frame to the brightness adjustment level.

5. The computer-implemented method of claim 4, wherein the mapping is based on a type of a display.

6. The computer-implemented method of any preceding claim, wherein the video frame corresponds to a current video frame of a video; and
wherein the brightness adjustment level is further based on a cumulative darkness level of preceding video frames.

7. The computer-implemented method of any preceding claim, wherein determining the darkness level of the video frame comprises:
determining contents of the video frame using a machine learning model; and
determining the darkness level based on the contents.

8. The computer-implemented method of any preceding claim, further comprising:
determining contents of the video frame using a machine learning model; and
determining the darkness level based on the contents.

9. A system, comprising:
one or more memories;
at least one processor each coupled to at least one of the memories and configured to perform operations comprising:
determining a darkness level of a video frame;
determining a brightness adjustment level based on the darkness level of the video frame; and
adjusting a brightness level for a later video frame based on at least the brightness adjustment level, wherein the brightness level for the later video is adjusted within two video frames from the video frame.

10. The system of claim 9, wherein the operations further comprise:
converting the video frame from color to grayscale;
determining a histogram associated with the video frame using the converted video frame; and
determining the darkness level of the video frame based on the histogram.

11. The system of claim 9 or 10, wherein the operations further comprise:
determining a brightness setting based on the brightness adjustment level; and
transmitting the brightness setting to a display via an application programming interface.

12. The system of any of claims 9 to 11, wherein the operations further comprise:
mapping the darkness level of the video frame to the brightness adjustment level.

13. The system of claim 12, wherein the mapping is based on a type of a display.

14. The system of any of claims 9 to 13, wherein the operations further comprise:
determining contents of the video frame using a machine learning model; and
determining the darkness level based on the contents.

15. A non-transitory computer-readable medium having instructions stored thereon that, when executed by at least one computing device, cause the at least one computing device to perform the method of any of claims 1 to 8.
